# FASCICULE DE BREVET EUROPEEN

(11) **EP 2 051 918 B1**
(45) Date de publication et mention de la délivrance du brevet: **18.11.2009**
(21) Numéro de dépôt: 07787815.5
(22) Date de dépôt: 23.07.2007
(51) Int. Cl.: B65G 47/248

(54) **DISPOSITIF DE RETOURNEMENT DE RÉCIPIENTS**
VORRICHTUNG ZUM UMDREHEN VON BEHÄLTERN
CONTAINER INVERTING DEVICE

(30) Priorité: 04.08.2006 FR 0653288
(43) Date de publication de la demande: 29.04.2009
(73) Titulaire: Sidel Participations, 76930 Octeville Sur Mer (FR)
(72) Inventeur: CIRETTE, Damien, 76930 (FR)
(74) Mandataire: Thibaudeau, David A. C. R.
(86) Numéro de dépôt international: PCT/EP2007/057572
(87) Numéro de publication internationale: WO 2008/015121

(56) Documents cités:
- DE-C1- 4 022 486

## Description

La présente invention concerne un dispositif de retournement de récipients.

Dans l'état de la technique, on connaît des dispositifs dans lesquels des récipients sont orientés dans une direction permettant leur nettoyage ou leur remplissage. Cependant, au cours de la production de tels récipients, ou encore au cours de leur conditionnement, leur orientation verticale doit parfois être changée.

Dans l'état de la technique, on connaît aussi des dispositifs de nettoyage qui permettent de nettoyer les parois internes d'un récipient, tel qu'une bouteille, en sortie d'une machine de production ou de traitement après production de tels récipients. Le poste de nettoyage est équipé d'un tube d'insufflation qui s'étend suivant un axe sensiblement vertical. Une source de gaz sous pression débite un gaz d'insufflation vers les parois internes du récipient grâce à une buse portée par le tube et conçue spécialement à cet effet. Le récipient est supporté avec son ouverture (ou col) vers le bas par un moyen de saisie, tel qu'une pince, puis est déplacé en translation relativement au tube d'insufflation. Le gaz sous pression est alors injecté, et, en raison de la disposition de l'ouverture du récipient vers le bas, les poussières et débris solides sont chassés du récipient.

Tout particulièrement, lorsque les récipients sont des bouteilles, ils parviennent généralement à un tel dispositif de nettoyage en étant suspendus par leur col, lequel est dirigé vers le haut. Dans ce cas, il faut réaliser un retournement de la bouteille, pour que le col de la bouteille, et donc son ouverture, se retrouve vers le bas au moins dans la zone de nettoyage du dispositif de nettoyage.

Dans l'état de la technique, on a déjà proposé des dispositifs de retournement de bouteilles permettant de positionner le col des bouteilles vers le bas dans le dispositif de nettoyage. De tels dispositifs de retournement sont équipés de cames, de pinces solidaires de chariots (ou autres mécanismes à galets) agencés pour que, lors de leur déplacement, les bouteilles saisies par leur col, alors que celui-ci se trouve en haut, à l'aide des pinces soient retournées grâce à l'action combinée des cames et chariots portant les pinces, de sorte que les cols se retrouvent alors dirigés vers le bas. Puis un mécanisme de monte et baisse permet de déplacer en translation les bouteilles le long du tube d'insufflation.

Particulièrement, on connaît des cames de retournement dont la forme est sensiblement hélicoïdale. Cependant, de telles cames de retournement deviennent très difficiles à mettre en oeuvre lorsque l'on veut associer un dispositif de retournement à une machine de nettoyage de bouteilles à grande cadence. Plus particulièrement, un dispositif de retournement conçu autour d'une telle came de retournement hélicoïdale est très difficile à régler lorsque l'on désire obtenir de grandes cadences de nettoyage des bouteilles.

La présente invention concerne un dispositif de retournement de récipients qui remédie aux inconvénients de l'état de la technique.

Selon l'invention, un dispositif de retournement comporte une courroie sur laquelle est fixée une pince de saisie du col d'un récipient à l'aide d'une fixation et au moins une poulie autour de laquelle la courroie est au moins partiellement enroulée, et, afin d'exécuter le retournement du récipient, des moyens sont prévus pour entraîner la courroie autour de la dite poulie de façon à faire passer la fixation de la pince par deux emplacements diamétralement opposés de la poulie.

Selon un aspect de l'invention, la courroie est supportée entre deux poulies et elle est solidaire d'un premier chariot qui est entraîné en translation par une partie motrice de moyens moteurs de sorte que l'entraînement du chariot par ladite partie motrice provoque celui de la courroie.

Selon un aspect de l'invention, le dispositif de retournement comporte un moyen de réglage de la position de chargement et de déchargement du mécanisme de retournement.

Selon un aspect de l'invention, le moyen de réglage de la position de chargement et de déchargement comporte une butée fixe, solidaire d'un bâti.

Selon un aspect de l'invention, la fixation de la pince est agencée de manière à ce que, en l'absence de butée, la pince soit légèrement inclinée vers le bas et la hauteur de la butée relativement au bâti du mécanisme de retournement est réglée de sorte que la pince soit dans une position déterminée de référence en position d'attente d'un récipient.

Selon un aspect de l'invention, le dispositif de retournement comporte un moyen de réglage de la position « retournée » de la pince.

Selon un aspect de l'invention, le moyen de réglage de la position «retournée» de la pince comporte un moyen de réglage de la position de fixation du chariot solidaire d'une première barre de liaison aux moyens moteur.

Selon un aspect de l'invention, les moyens moteur sont connectés par une première barre au chariot solidaire de la courroie, la première barre étant solidaire d'un second chariot qui peut coulisser le long d'un guide et qui est connecté aux moyens moteurs à l'aide d'une autre barre, ladite autre barre portant une première butée mobile qui est en vis-à-vis avec une seconde butée fixe.

Selon un aspect de l'invention, le dispositif de retournement comporte un moyen pour annuler les jeux et des erreurs de réglage dans le mécanisme de retournement.

Selon un aspect de l'invention, ledit moyen pour annuler les jeux et des erreurs de réglage dans le mécanisme de retournement comporte un élément de longueur réglable attaché par une extrémité à un bâti portant les poulies et une autre extrémité à une poulie.

Selon un aspect de l'invention, une partie du bâti est connectée par une seconde barre à un second chariot mobile sur un guide, une quatrième barre connecte le second chariot d'une part à la butée fixe et à une première extrémité de l'élément de longueur réglable et d'autre part à une butée de réglage, l'élément de longueur réglable présentant une seconde extrémité qui est solidaire par une cinquième barre aux moyens moteur. Selon un aspect de l'invention, la seconde butée comporte un élément de réglage de sa position relativement à la course de la première butée permettant de fournir un effort vertical capable de maintenir la quatrième barre en appui sur la butée de réglage, et ce quelle que soit la position des moyens moteur

Selon un aspect de l'invention, les éléments de longueur réglable sont constitués par des mécanismes à ressort, dont l'élongation au repos est initialement réglée de manière à équilibrer les efforts statiques sur le mécanisme de retournement et dont le coefficient d'allongement est calculé de manière à équilibrer les efforts dynamiques sur le mécanisme de retournement lors du mouvement de retournement des bouteilles chargées sur la pince.

Selon un aspect de l'invention, les moyens moteurs comportent une came et un galet suiveur de came solidaire du mécanisme de retournement, avec son bâti montés avec le suiveur de came sur un carrousel de sorte que, lors de la rotation du carrousel, le suiveur de came suive une course verticale lors du passage du mécanisme de retournement à des positions angulaires déterminées.

Selon un aspect de l'invention, le dispositif de retournement comporte une pluralité de mécanismes de retournement fonctionnant en parallèle.

Selon un aspect de l'invention, les axes de retournement sont tangents à un cercle sur lequel sont disposés les mécanismes de retournement avec des pas angulaire permettant le retournement simultané des bouteilles.

L'invention sera mieux comprise à l'aide de la description et des figures annexées parmi lesquelles :
-- la figure 1 représente un schéma de principe d'un dispositif de retournement selon l'invention ;
-- les figures 2 et 3 sont deux vues d'un schéma de principe d'un mode de réalisation de l'invention dans deux états du dispositif

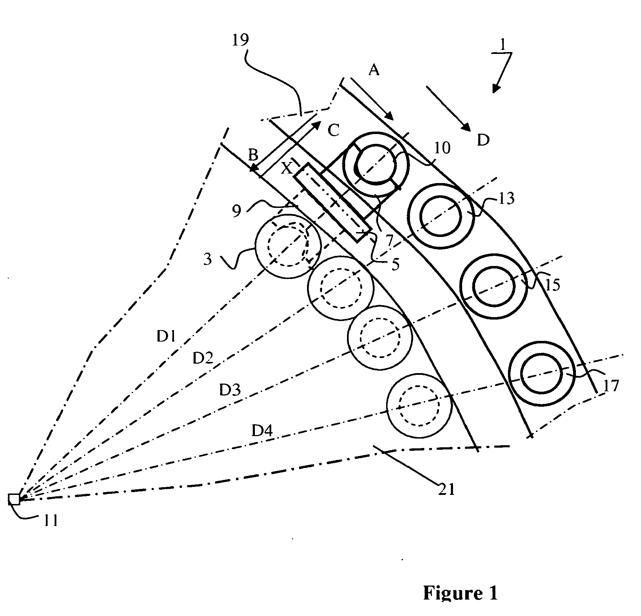

À la figure 1, on a représenté vu de dessus un schéma de principe d'un dispositif de retournement selon l'invention, lequel dispositif est désigné sous la référence générale 1 et constitue une partie d'une machine de traitement, laquelle machine n'est pas entièrement représentée. Les récipients, ici des bouteilles dont on a seulement représenté le goulot vu de dessus, sont amenés au moins un par un à l'entrée 19 du dispositif 1 de retournement. Considérons la bouteille 10 : Elle est transférée sur le dispositif 1 de retournement selon le mouvement de la flèche A. Un mécanisme 5 individuel de retournement est doté d'une pince 7 qui saisit la bouteille par son col ou goulot. Le mécanisme 5 de retournement retourne la bouteille 10, selon la flèche B pour mettre la bouteille, dans la position 3 retournée. Cette étape est réalisée en faisant tourner la pince 7 autour d'un axe X horizontal perpendiculaire à l'axe D1 de transfert, la pince 7 se présente alors dans la position représentée en traits interrompus 9. Une fois le traitement appliqué sur le dispositif 1, le mécanisme 5 individuel de retournement exécute le mouvement inverse selon la flèche C de sorte que la bouteille retournée dans la position 3 retourne à sa position initiale 10. Puis, le dispositif de retournement avance d'un pas supplémentaire de sorte que la bouteille traitée et retournée à nouveau dans la position initiale est transférée selon la flèche D.

Dans un mode particulier de réalisation visible à la figure 1, au lieu d'utiliser un seul dispositif de retournement comme le mécanisme de retournement 5, le dispositif 1 de retournement de l'invention comporte plusieurs mécanismes de retournement (ici quatre mécanismes ont été représentés), identiques au mécanisme 5 de retournement et alignés respectivement le long d'axes D1 à D4. Le pas angulaire entre les axes D1 à D4 est calculé de sorte que, malgré le rapprochement apporté par le mouvement de retournement autour de l'axe horizontal de chaque mécanisme de retournement, les bouteilles retournées ne rentrent pas en collision et peuvent être alors traitées à l'aide des dispositifs de traitement prévus dans la machine de traitement représentée partiellement à la figure 1.

Dans une application particulière, la machine de traitement comporte un plateau ou carrousel 21 circulaire, d'axe 11 central. Le carrousel 21 comporte au moins quatre buses et/ou tubes d'insufflation d'un fluide de rinçage sous pression qui est alors injecté dans chacune des quatre bouteilles retournées. Une fois exécuté le rinçage des quatre bouteilles retournées, les quatre mécanismes de retournement comme le mécanisme 5 retournent à nouveau les quatre bouteilles et les ramènent, sur le carrousel 21 de transfert du dispositif de retournement dans la position externe qu'elles occupaient au moment de leur introduction, afin qu'elles puissent par exemple être sorties du dispositif.

Un tel fonctionnement en parallèle est rendu possible par le fait que chacun des axes D1 à D4 présente un écartement angulaire avec ses voisins suffisant pour permettre le retournement des bouteilles.

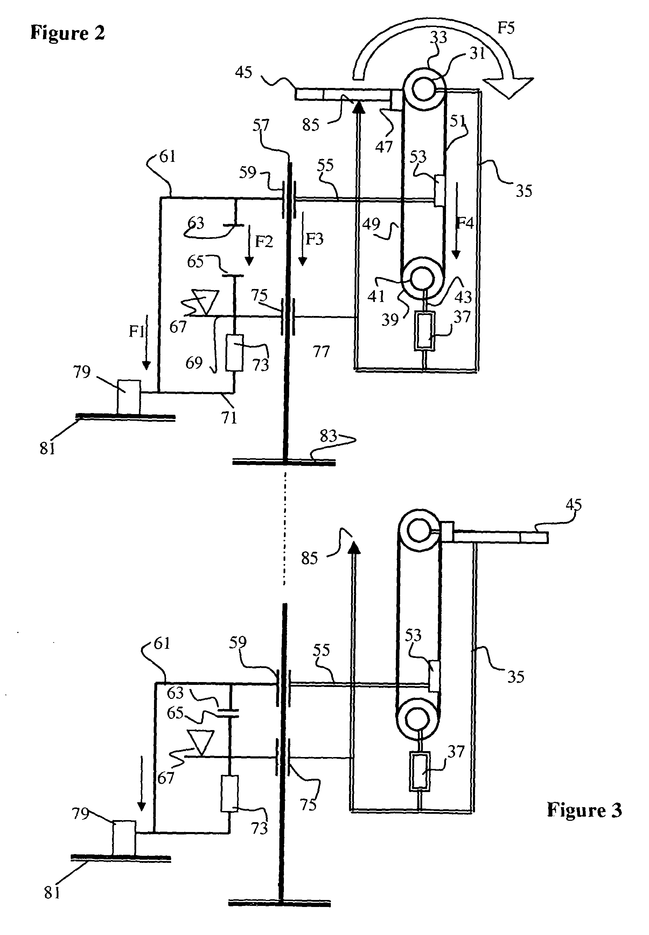

Aux figures 2 et 3, on a représenté, en deux positions différentes, le schéma de principe du mécanisme de retournement pour une seule bouteille, II est entendu que le schéma peut être répété pour un nombre quelconque de mécanismes disposés en parallèle, comme à la figure 1.

À la figure 2, une pince 45 a été représentée sur le mécanisme de retournement dans sa position initiale avant que soit commencé le mouvement de retournement. Ainsi qu'il est connu de l'état de la technique, la pince 45 saisit une bouteille par son col, l'orientation de la bouteille étant donc dirigée vers le haut de la figure. La pince est fixée, par une fixation 47 articulée, sur une courroie 49 qui est entraînée par la rotation de deux poulies, respectivement une première poulie 33 et une seconde poulie 39.

La pince 45 est fixée de façon telle que, lorsque la courroie 49 est mise en mouvement ainsi qu'il sera décrit plus loin, la pince amorce un mouvement de rotation autour de la poulie 33 selon la flèche F5, et passe en regard de deux points diamétralement opposés de la poulie, de sorte qu'elle change d'orientation et permet le retournement du récipient qui s'y trouve fixé. Le mécanisme de retournement, représenté dans le mode de réalisation de la figure 2, comporte des moyens moteurs qui permettent le défilement de la courroie 49.

Les moyens moteur comportent essentiellement une partie motrice 79, 81, tel un mécanisme à came, qui entraîne en translation un premier chariot 53 solidaire d'un brin 51 de la courroie 49, ce brin étant entraîné dans une première partie du mouvement de retournement selon un mouvement descendant, illustré par la flèche F4.

Lorsque les moyens moteurs sont commandés pour démarrer le mouvement de retournement, le brin 51 de la courroie est entraîné selon la flèche F4 par la translation du chariot 53 de sorte que la courroie entraîne la pince 45 selon la flèche F5. L'amplitude de l'entraînement est telle que les moyens de fixation 47 et donc la pince 45 associée passent d'un côté (considéré dans le plan vertical) à l'autre de la poulie 33, donc en au moins deux point diamétralement opposés de la poulie 33, ce qui provoque le retournement de la pince. À la fin du retournement, les moyens moteurs arrêtent la translation du chariot 53 et un traitement approprié peut être appliqué à la bouteille retournée, portée par la pince 45.

Pour retourner la bouteille et la ramener à son point de chargement, les moyens moteurs commandent alors une translation du chariot 53 dans le sens inverse à la flèche F4 et la pince 45 subit une rotation autour de la poulie 33 dans le sens inverse de la flèche F5. La bouteille, par exemple ayant subi le traitement de rinçage, peut alors être déchargée de la pince 45 et retourner sur le carrousel 21 de transfert (voir figure 1).

Dans le mode de réalisation de la figure 2, on a prévu un moyen de réglage de la position de chargement et de déchargement du mécanisme de retournement. Grâce à ce moyen de réglage de la position de chargement et de déchargement, la position de chargement de la pince 45 est déterminée par une butée 85, solidaire d'un bâti 35 du mécanisme de transfert. Pour réaliser un réglage efficace du mécanisme de transfert, la fixation 47, qui, on le rappelle, est articulée, est calculée de manière à ce que, en l'absence de butée 85, la pince 45 soit légèrement inclinée vers le bas. La hauteur de la butée 85 relativement au bâti 35 du mécanisme de retournement est réglée de sorte que la pince 45 en position d'attente d'une bouteille, soit perpendiculaire à la direction de la courroie 49, donc horizontale.

Dans le mode de réalisation de la figure 2, on a prévu un moyen de réglage de la position « retournée » de la pince 45.

En particulier, le moyen de réglage de la position « retournée » de la pince 45 comporte un moyen de réglage de la position de fixation du premier chariot 53 solidaire d'une première barre 55 de liaison au moyens moteur 79, 81. Particulièrement, le premier chariot 53 est composé de deux plaques montées de part et d'autre de la courroie. Les plaques sont réunies, à travers ou de part et d'autre de la courroie. La solidarisation du chariot 53 et de la courroie 49 se réalise par des éléments de liaison comme des vis. Lors du réglage du mécanisme de retournement, l'opérateur dessert les vis et fait coulisser le chariot 53 le long de la courroie jusqu'à atteindre une position correcte du chariot 53. Il peut alors resserrer les vis pour solidariser le chariot à la courroie.

À cet effet, les moyens moteur 79, 81 sont connectés par la première barre 55 au premier chariot 53 solidaire du brin 51 de la courroie 49. La première barre 55 est solidaire d'un second chariot 59 qui peut coulisser le long d'un guide 57. Le second chariot 59 est connecté aux moyens moteurs à l'aide d'une autre barre 61.

L'autre barre 61 porte une première butée 63 qui est en vis-à-vis avec une seconde butée 65 dont la position peut-être réglée de façon à réduire la course avec la première butée 63, ladite course étant représentée par la flèche F2. Lorsque la première butée 63 rencontre la seconde butée 65, la pince 45 a terminé sa course de retournement F5.

Dans un autre mode de réalisation non représenté, la position de la butée 65 n'est pas réglable, et donc la course F2 non plus. Celle ci est complètement dépendante de la course des moyens moteur 79, 81.

Dans le mode de réalisation de la figure 2, on a prévu un moyen pour annuler les jeux et les erreurs de réglage dans le mécanisme de retournement. À cet effet, la première poulie 33 est montée sur un premier axe 31 solidaire d'un palier du bâti 35 du mécanisme de retournement. La seconde poulie 39 est montée sur un second axe 41 solidaire du bâti 35 du mécanisme de retournement par l'intermédiaire d'une barre de connexion 43 à une extrémité d'un moyen 37 réglable en longueur. Le moyen 37réglable en longueur est attaché par une autre extrémité au bâti 35.

En outre, la partie du bâti 35, solidaire du moyen 37 réglable, est connectée par une seconde barre 77 à un troisième chariot 75 mobile sur un guide comme le guide 57. Par ailleurs, une quatrième barre 69 connecte le troisième chariot 75 d'une part à la butée fixe 65 et à une première extrémité d'un second élément de longueur réglable 73 et d'autre part à une butée 67 de réglage. Un second moyen 73 de longueur réglable présente une seconde extrémité qui est solidaire par une cinquième barre 71 aux moyens moteur 79, 81.

L'ensemble des éléments 63, 65, 67, 75, 69 et 73 sont là pour assurer la transition entre le premier objectif du mécanisme, qui est de retourner les bouteilles (décrit précédemment), au deuxième objectif qui est d'assurer un mouvement vertical de chaque bouteille le long d'une buse de nettoyage par exemple.

Le moyen moteur 81 telle qu'une came possède 2 rampes, l'une à la suite de l'autre.

La première rampe sert à assurer le retournement. Durant ce retournement, l'ensemble des éléments 61, 59, 55 se déplace verticalement. Le bâti 35 est immobile grâce à la poussée du second moyen réglable 73 tel qu'un ressort qui maintient la barre de liaison 69 sur la butée 67. Il y a donc un mouvement relatif de l'ensemble des éléments 61, 59, 55 et 53 par rapport à l'ensemble des éléments 35, 51, 47, 41, 39, 37, 43, 31, 33, ce qui permet d'actionner la courroie et donc de retourner la pince.

Lorsque le moyen moteur 79 tel qu'un galet se trouve à la fin de la première rampe de la came, le retournement est terminé. Les butées 63 et 65 se trouvent en contact. Le second moyen réglable 73 tel qu'un ressort est détendu mais assure encore une poussée suffisante, ce qui assure une « cohésion » entre le premier ensemble 61, 59, 55 et le deuxième 35, 51, 47, 41, 39, 37, 43, 31 , 33.

Lorsque le moyen moteur 79 tel qu'un galet roule sur la deuxième rampe, les deux ensembles coulissent verticalement par rapport au support 83, la barre 69 décolle de la butée 67, cette dernière étant fixe par rapport au support 83. La bouteille retournée effectue alors un mouvement vertical de descente.

Préférentiellement, le troisième chariot 75 coulisse sur le même guide et suit le même chemin que le second chariot 59. Le guide 57 est solidaire du bâti et par exemple solidaire de l'élément fixe auquel les moyens moteur 79, 81 sont raccordés.

Préférentiellement, lorsque les éléments de longueur réglable sont constitués par des mécanismes à ressort, leur élongation au repos est initialement réglée de manière à équilibrer les efforts statiques sur le mécanisme de retournement et leur coefficient d'allongement est calculé de manière à équilibrer les efforts dynamiques sur le mécanisme de retournement lors du mouvement de retournement des bouteilles chargées sur la pince 45.

À la figure 3, on a représenté le mécanisme de retournement de la figure 2, dans la position « retournée ». Pour permettre la comparaison des deux états, on a utilisé l'axe du guide 57 comme référence de positionnement. De plus, on a porté seulement quelques numéros de référence et on se reportera aux éléments correspondants à la figure 2 pour leur explication.

À la figure 3, la première butée 63 est parvenue en contact avec la seconde butée fixe 65. Le premier chariot 53 est représenté en position basse et la pince 45 a été représentée dans la position «retournée».

Préférentiellement, les moyens moteurs comportent une came 81 et un galet suiveur de came 79 solidaire de la troisième barre 61 et/ou de la cinquième barre 71. Le mécanisme de retournement, avec son bâti 35 et l'ensemble des cinq barres décrit ci-dessus sont montés avec le suiveur de came 79 sur un carrousel, comme le carrousel 21 de la figure 1 de sorte que, lors de la rotation du carrousel, le suiveur de came suit une course verticale lors du passage du mécanisme de retournement à des positions angulaires déterminées.

Dans un autre mode de réalisation, le retournement est complété par un mouvement de descente de la pince 45 sur laquelle aura été placé le col d'un récipient comme une bouteille ainsi qu'il a été décrit à l'aide de la figure 1. La descente du récipient non représenté aux figures 2 et 3 pour éviter de les surcharger, permet notamment de faire pénétrer à l'intérieur du récipient une canne (non représentée) de soufflage et/ou d'injection d'un fluide de nettoyage comme de l'air et/ou d'un fluide d'aseptisation. Dans ce cas, la canne (non représentée aux figures 2 et 3) est disposée verticalement en parallèle avec l'axe central du récipient retourné et un mécanisme de soufflage et/ou d'injection (non représenté) auquel la canne est connectée est activé par un capteur de position basse (non représenté au dessin) qui détecte le passage du récipient retourné après la position haute dans une zone de soufflage et/ou d'injection de fluides. Lorsque l'opération programmée de soufflage et/ou d'injection est terminée, le suiveur de came 79 entraîne le mouvement inverse du récipient qui, monté sur la pince 45, remonte sur le brin à droite de la figure 3 et repasse dans la position haute de retournement, décrite ci-dessus pour le réglage du dispositif de retournement. Puis, le mouvement se poursuit pour replacer le récipient col en haut.

On remarque que la butée 65 doit alors être disposée de manière à permettre la poursuite de la descente au-delà de la position « haute » de retournement à l'entrée de la section rectiligne du brin « à droite » de la figure 3 sur la courroie 51. Il s'agit ici d'une simple mesure d'adaptation qu'il est possible d'exécuter au réglage du dispositif de l'invention. A cette fin, le réglage de la course du chariot 53 le long du brin 51 « à droite » aux figures 2 et 3 assure que la pince 45 passe d'une position « à gauche » de la poulie 33 à la figure 2, à une position « à droite » de la poulie 33 à la figure 3, puis encore une course le long du brin « à droite » 51 dans le sens de la descente jusqu'à la zone de soufflage et/ou d'injection sur la canne du mécanisme de soufflage et/ou d'injection. Lorsque la pince 45 est arrivée en fin de course, le suiveur de came 79 rencontre une portion de came 81 assurant l'inversion du mouvement de la pince 45, qui remonte le long du brin « à droite » à la figure 2 pour parvenir dans la position haute « à droite » de la poulie 33, et enfin effectue le mouvement de retournement inverse qui ramène la pince et le récipient comme une bouteille dans la position initiale « à gauche de la poulie 31 à la figure 2 où la pince est alors ouverte pour relâcher la bouteille après lavage et/ou soufflage.

## Revendications

1. - Dispositif de retournement de récipients présentant un col dirigé selon une première direction en un emplacement du dispositif puis selon une seconde direction, opposée à la première, en un autre emplacement du dispositif, **caractérisé en ce qu'**il comporte une courroie (49) sur laquelle est fixée une pince (45) de saisie du col d'un récipient à l'aide d'une fixation (47) et au moins une poulie (33) autour de laquelle la courroie est au moins partiellement enroulée et **en ce que**, afin d'exécuter le retournement du récipient, des moyens (79, 81, 53) sont prévus pour entraîner la courroie autour de la dite poulie de façon à faire passer la fixation (47) de la pince par deux emplacements diamétralement opposés de la poulie.

2. - Dispositif selon la revendication 1, **caractérisé en ce que** la courroie (49) est supportée entre deux poulies (33, 39) et **en ce qu'**elle est solidaire d'un premier chariot (53) qui est entraîné en translation par une partie motrice (79, 81) de moyens moteurs de sorte que l'entraînement du chariot (53) par ladite partie motrice provoque celui de la courroie (49).

3. - Dispositif selon la revendication 2, **caractérisé en ce qu'**il comporte un moyen de réglage de la position de chargement et de déchargement du mécanisme de retournement.

4. - Dispositif selon la revendication 3, **caractérisé en ce que** le moyen de réglage de la position de chargement et de déchargement comporte une butée fixe (85), solidaire d'un bâti (35).

5. - Dispositif selon la revendication 4, **caractérisé en ce que** la fixation (47) est articulée et agencée de manière à ce que, en l'absence de butée (85), la pince (45) soit légèrement inclinée vers le bas et **en ce que** la hauteur de la butée (85) relativement au bâti (35) du mécanisme de retournement est réglée de sorte que la pince (45) dans une position déterminée de référence en position d'attente d'un récipient.

6. - Dispositif selon l'une quelconque des revendications précédentes, **caractérisé en ce qu'**il comporte un moyen de réglage de la position « retournée » de la pince (45).

7. - Dispositif selon la revendication 6, **caractérisé en ce que** le moyen de réglage de la position « retournée » de la pince (45) comporte un moyen de réglage de la position de fixation du premier chariot (53) à la courroie (49) solidaire d'une première barre (55) de liaison aux moyens moteur (79, 81).

8. - Dispositif selon la revendication 6, **caractérisé en ce que** les moyens moteur (79, 81) sont connectés par une première barre (55) au premier chariot (53) solidaire de la courroie (49), la première barre (55) étant solidaire d'un second chariot (59) qui peut coulisser le long d'un guide (57) et qui est connecté aux moyens moteurs à l'aide d'une autre barre (61), ladite autre barre (61) portant une première butée (63) mobile qui est en vis-à-vis avec une seconde butée (65).

9. - Dispositif selon l'une quelconque des revendications précédentes, **caractérisé en ce qu'**il comporte un moyen pour annuler les jeux et les des erreurs de réglage dans le mécanisme de retournement.

10. - Dispositif selon la revendication 9, **caractérisé en ce que** ledit moyen pour annuler les jeux et les des erreurs de réglage dans le mécanisme de retournement comporte un élément de longueur réglable (37) attaché par une extrémité à un bâti (35) portant les poulies (33, 41) et une autre extrémité à une poulie (39).

11. - Dispositif selon la revendication 10, **caractérisé en ce que** une partie du bâti (35) est connectée par une seconde barre (77) à un second chariot (75) mobile sur un guide (57), une quatrième barre (69) connecte le second chariot (75) d'une part à la butée fixe (65) et à une première extrémité de l'élément de longueur réglable (73) et d'autre part à une butée de réglage (67), l'élément de longueur réglable (73) présentant une seconde extrémité qui est solidaire par une cinquième barre (71) aux moyens moteur (79, 81).

12. - Dispositif selon la revendication 11, **caractérisé en ce que** la seconde butée (65) comporte un élément de réglage de sa position relativement à la course de la première butée (63) permettant de fournir un effort vertical capable de maintenir la quatrième barre (69) en appui sur la butée de réglage (67), et ce quelle que soit la position des moyens moteur.

13. - Dispositif selon l'une quelconque des revendications 10 à 12, **caractérisé en ce que** les éléments de longueur réglable sont constitués par des mécanismes à ressort, dont l'élongation au repos est initialement réglée de manière à équilibrer les efforts statiques sur le mécanisme de retournement et dont le coefficient d'allongement est calculé de manière à équilibrer les efforts dynamiques sur le mécanisme de retournement lors du mouvement de retournement des bouteilles chargées sur la pince (45).

14. - Dispositif selon l'une quelconque des revendications 2 à 13, **caractérisé en ce que** les moyens moteurs comportent une came (81) et un galet (79) suiveur de came solidaire du mécanisme de retournement, avec son bâti (35) montés avec le galet (79) sur un carrousel (21) de sorte que, lors de la rotation du carrousel, le suiveur de came suive une course verticale lors du passage du mécanisme de retournement à des positions angulaires déterminées.

15. - Dispositif selon l'une quelconque des revendications précédentes, **caractérisé en ce qu'**il comporte une pluralité de mécanismes de retournement fonctionnant en parallèle.

16. - Dispositif selon la revendication 15, **caractérisé en ce que** les axes de retournement sont tangents à un cercle sur lequel sont disposés les mécanismes de retournement avec des pas angulaire permettant le retournement simultané des bouteilles.

## Claims

1. - A device for inverting containers having a neck directed in a first direction in one location of the device then, in a second direction, opposite to the first, in another location of the device, **characterized in that** it comprises a belt (49) to which a clamp (45) for gripping the neck of a container is attached with the aid of a fastener (47) and at least one pulley (33) about which the belt is at least partially wound, and **in that**, in order to carry out the inversion of the container, means (79, 81, 53) are provided for driving the belt about said pulley so as to cause the fastener (47) of the clamp to pass by two diametrically opposed locations of the pulley.

2. - The device as claimed in claim 1, **characterized in that** the belt (49) is supported between two pulleys (33, 39) and **in that** it is secured to a first carriage (53) which is driven in translation by a driving portion (79, 81) of driving means so that the driving of the carriage (53) by said driving portion causes that of the belt (49).

3. - The device as claimed in claim 2, **characterized in that** it comprises a means for adjusting the loading and unloading position of the inversion mechanism.

4. - The device as claimed in claim 3, **characterized in that** the means for adjusting the loading and unloading position comprises a fixed stop (85), secured to a frame (35).

5. - The device as claimed in claim 4, **characterized in that** the fastener (47) is articulated and arranged so that, in the absence of stop (85), the clamp (45) is slightly inclined downward and **in that** the height of the stop (85) relative to the frame (35) of the inversion mechanism is adjusted so that the clamp (45) is in a determined reference position is in position awaiting a container.

6. - The device as claimed in any one of the preceding claims, **characterized in that** it comprises a means for adjusting the "inverted" position of the clamp (45).

7. - The device as claimed in claim 6, **characterized in that** the means for adjusting the "inverted" position of the clamp (45) comprises a means for adjusting the position of attachment of the first carriage (53) to the belt (49) secured to a first bar (55) for connection to the driving means (79, 81).

8. - The device as claimed in claim 6, **characterized in that** the driving means (79, 81) are connected by a first bar (55) to the first carriage (53) secured to the belt (49), the first bar (55) being secured to a second carriage (59) which can slide along a guide (57) and which is connected to the driving means with the aid of another bar (61), said other bar (61) supporting a first movable stop (63) which is facing a second stop (65).

9. - The device as claimed in any one of the preceding claims, **characterized in that** it comprises a means for removing the clearances and adjustment errors in the inversion mechanism.

10. - The device as claimed in claim 9, **characterized in that** said means for removing the clearances and adjustment errors in the inversion mechanism comprises an element of adjustable length (37) attached by one end to a frame (35) supporting the pulleys (33, 41) and another end to a pulley (39).

11. - The device as claimed in claim 10, **characterized in that** a portion of the frame (35) is connected by a second bar (77) to a second carriage (75) that is movable on a guide (57), a fourth bar (69) connects the second carriage (75) on the one hand to the fixed stop (65) and to a first end of the element of adjustable length (73) and on the other hand to an adjustment stop (67), the element of adjustable length (73) having a second end which is secured by a fifth bar (71) to the driving means (79, 81).

12. - The device as claimed in claim 11, **characterized in that** the second stop (65) comprises an element for adjusting its position relative to the travel of the first stop (63) making it possible to provide a vertical force capable of keeping the fourth bar (69) pressing on the adjustment stop (67), and to do so irrespective of the position of the driving means.

13. -The device as claimed in any one of claims 10 to 12, **characterized in that** the elements of adjustable length are formed by sprung mechanisms, the elongation of which at rest is initially adjusted so as to balance the static forces on the inversion mechanism and of which the coefficient of elongation is computed so as to balance the dynamic forces on the inversion mechanism during the movement of inversion of the bottles loaded onto the clamp (45).

14. - The device as claimed in any one of claims 2 to 13, **characterized in that** the driving means comprise a cam (81) and a cam follower roller (79) secured to the inversion mechanism, with its frame (35) mounted with the roller (79) on a carousel (21) so that, during the rotation of the carousel, the cam follower follows a vertical course when the inversion mechanism moves to determined angular positions.

15. - The device as claimed in any one of the preceding claims, **characterized in that** it comprises a plurality of inversion mechanisms operating in parallel.

16. - The device as claimed in claim 15, **characterized in that** the axes of inversion are tangential to a circle on which the inversion mechanisms are placed with angular pitches allowing the simultaneous inversion of the bottles.

## Patentansprüche

1. Vorrichtung zum Umdrehen von Aufnahmebehältern, die einen Hals aufweisen, der an einem Ort der Vorrichtung in eine erste Richtung weist und dann an einem anderen Ort der Vorrichtung in eine zu der ersten Richtung entgegengesetzte zweite Richtung weist, **dadurch gekennzeichnet, dass** sie einen Riemen (49), an dem eine Klemmeinrichtung (45) zum Festklemmen des Halses eines Aufnahmebehälters mit Hilfe einer Befestigungseinrichtung (47) befestigt ist, und wenigstens eine Riemenscheibe (33), um die der Riemen wenigstens teilweise gewickelt ist, umfasst und dass zum Ausführen des Umdrehens des Aufnahmebehälters Mittel (79, 81, 53) vorgesehen sind, um den Riemen um die Riemenscheibe in der Weise anzutreiben, dass die Befestigungseinrichtung (47) der Klemmeinrichtung durch zwei diametral gegenüberliegende Orte der Riemenscheibe bewegt wird.

2. Vorrichtung nach Anspruch 1, **dadurch gekennzeichnet, dass** der Riemen (49) zwischen zwei Riemenscheiben (33, 39) unterstützt ist und dass er mit einem ersten Schlitten (53) fest verbunden ist, der durch einen Antriebsteil (79, 81) von Motormitteln translatorisch angetrieben wird, derart, dass der Antrieb des Schlittens (53) durch den Antriebsteil den Antrieb des Riemens (49) hervorruft.

3. Vorrichtung nach Anspruch 2, **dadurch gekennzeichnet, dass** sie ein Mittel zum Einstellen der Belade- und der Entladeposition des Umdrehmechanismus umfasst.

4. Vorrichtung nach Anspruch 3, **dadurch gekennzeichnet, dass** das Mittel zum Einstellen der Belade- und der Entladeposition einen mit einem Rahmen (35) fest verbundenen festen Anschlag (85) umfasst.

5. Vorrichtung nach Anspruch 4, **dadurch gekennzeichnet, dass** die Befestigungseinrichtung (47) angelenkt und so ausgelegt ist, dass bei Abwesenheit des Anschlags (85) die Klemmeinrichtung (45) leicht nach unten geneigt ist, und dass die Höhe des Anschlags (85) relativ zum Rahmen (35) des Umdrehmechanismus in der Weise eingestellt ist, dass die Klemmeinrichtung (45) in der Position, in der sie auf einen Aufnahmebehälter wartet, in einer bestimmten Referenzposition ist.

6. Vorrichtung nach einem der vorhergehenden Ansprüche, **dadurch gekennzeichnet, dass** sie ein Mittel zum Einstellen der "umgedrehten" Position der Klemmeinrichtung (45) umfasst.

7. Vorrichtung nach Anspruch 6, **dadurch gekennzeichnet, dass** das Mittel zum Einstellen der "umgedrehten" Position der Klemmeinrichtung (45) ein Mittel zum Einstellen der Befestigungsposition des ersten Schlittens (53) am Riemen (49), der mit einer ersten Stange (55) für die Verbindung mit den Motormitteln (79, 81) fest verbunden ist, umfasst.

8. Vorrichtung nach Anspruch 6, **dadurch gekennzeichnet, dass** die Motormittel (79, 81) durch eine erste Stange (45) mit dem ersten Schlitten (53), der mit dem Riemen (49) fest verbunden ist, verbunden sind, wobei die erste Stange (55) mit einem zweiten Schlitten (59), der längs einer Führung (57) gleiten kann und der mit den Motormitteln mit Hilfe einer anderen Stange (61) verbunden ist, fest verbunden ist und wobei die andere Stange (61) einen ersten beweglichen Anschlag (63) trägt, der sich gegenüber einem zweiten Anschlag (65) befindet.

9. Vorrichtung nach einem der vorhergehenden Ansprüche, **dadurch gekennzeichnet, dass** sie ein Mittel umfasst, um die Spiele und Einstellfehler im Umdrehmechanismus zu beseitigen.

10. Vorrichtung nach Anspruch 9, **dadurch gekennzeichnet, dass** das Mittel zum Beseitigen der Spiele und Einstellfehler im Umdrehmechanismus ein Element (37) mit einstellbarer Länge aufweist, das mit einem Ende an einem die Riemenscheiben (33, 41) tragenden Rahmen (35) und mit einem anderen Ende an einer Riemenscheibe (39) befestigt ist.

11. Vorrichtung nach Anspruch 10, **dadurch gekennzeichnet, dass** ein Teil des Rahmens (35) durch eine zweite Stange (77) mit einem zweiten Schlitten (75), der an einer Führung (57) beweglich ist, verbunden ist, eine vierte Stange (69) den zweiten Schlitten (75) einerseits mit dem festen Anschlag (65) und mit einem ersten Ende des Elements (73) mit einstellbarer Länge und andererseits mit einem Einstellanschlag (67) verbindet, wobei das Element (73) mit einstellbarer Länge ein zweites Ende aufweist, das durch eine fünfte Stange (71) mit den Motormitteln (79, 81) fest verbunden ist.

12. Vorrichtung nach Anspruch 11, **dadurch gekennzeichnet, dass** der zweite Anschlag (65) ein Element zum Einstellen seiner relativen Position in Bezug auf die Bahn des ersten Anschlags (63) umfasst, das ermöglicht, eine vertikale Kraft zu erzeugen, die die vierte Stange (69) unabhängig von der Position der Motormittel am Einstellanschlag (67) anliegend halten kann.

13. Vorrichtung nach einem der Ansprüche 10 bis 12, **dadurch gekennzeichnet, dass** die Elemente mit einstellbarer Länge durch Federmechanismen gebildet sind, deren Elongation im Ruhezustand zunächst in der Weise eingestellt ist, dass die statischen Kräfte auf den Umdrehmechanismus im Gleichgewicht sind, und deren Dehnungskoeffizient in der Weise berechnet ist, dass die dynamischen Kräfte auf den Umdrehmechanismus bei der Umdrehbewegung von in die Klemmeinrichtung (45) geladenen Flaschen im Gleichgewicht sind.

14. Vorrichtung nach einem der Ansprüche 2 bis 13, **dadurch gekennzeichnet, dass** die Motormittel eine Nockenkurve (81) und eine Nockenkurvenfolgerrolle (79), die mit dem Umdrehmechanismus fest verbunden ist, umfassen, wobei der Rahmen (35) mit der Rolle (79) an einem Karussell (21) montiert ist, derart, dass bei der Drehung des Karussells der Nockenkurvenfolger beim Durchgang des Umdrehmechanismus durch bestimmte Winkelpositionen einer vertikalen Bahn folgt.

15. Vorrichtung nach einem der vorhergehenden Ansprüche, **dadurch gekennzeichnet, dass** sie mehrere parallel arbeitende Umdrehmechanismen umfasst.

16. Vorrichtung nach Anspruch 15, **dadurch gekennzeichnet, dass** die Umdrehachsen zu einem Kreis, auf dem die Umdrehmechanismen in Winkelschrittweiten angeordnet sind, die das gleichzeitige Umdrehen der Flaschen ermöglichen, tangential sind.
